# EUROPEAN PATENT SPECIFICATION

(11) **EP 3 106 378 B1**
(45) Date of publication and mention of the grant of the patent: **07.06.2017**
(21) Application number: 15172882.1
(22) Date of filing: 19.06.2015
(51) Int. Cl.: B62M 6/50

(54) **BICYCLE PEDAL STRUCTURE CAPABLE OF TRIGGERING AUXILIARY POWER**
FAHRRADPEDALSTRUKTUR MIT FÄHIGKEIT ZUR AUSLÖSUNG VON HILFSLEISTUNG
STRUCTURE DE PEDALE DE BICYCLETTE CAPABLE DE DECLENCHER UNE PUISSANCE AUXILIAIRE

(43) Date of publication of application: 21.12.2016
(73) Proprietor: Motive Power Industry Co., Ltd., Dacun Township, Changhua County 515 (TW)
(72) Inventor: CHENG, Hsin-Lin, 515 Dacun Township, Changhua County (TW); TENG, Ching-Chung, 515 Dacun Township, Changhua County (TW)
(74) Representative: Bonvicini, Davide

(56) References cited:
- EP-A1- 1 324 913
- EP-A1- 2 470 417
- EP-A1- 2 534 035
- EP-A1- 2 842 857
- WO-A1-2013/095148
- CN-A- 104 044 682
- US-A- 5 952 587
- US-A1- 2012 234 108

## Description

### FIELD OF THE INVENTION

The present invention relates to bicycle pedal structures capable of triggering auxiliary power and more particularly to a bicycle pedal structure which is capable of triggering auxiliary power and mounted on a bicycle chassis to supply auxiliary power to an electric bicycle and thus drive the electric bicycle to move.

### BACKGROUND OF THE INVENTION

A conventional bicycle essentially comprises a pedal structure, a gear train coupled to a wheel axis, and a chain connected between the pedal structure and the gear train. In general, the pedal structure has a crank shaft, a gear coupled to the crank shaft, and pedal cranks disposed at the two ends of the crank shaft, respectively, such that a cyclist treads on the pedals connected to the pedal cranks to thereby rotate the crank shaft, thus allowing the chain to drive the wheels of the bicycle to rotate.

To render cycling less laborious, the prior art discloses a bicycle which comprises a driving motor and a controller thereof so as for the driving motor to supply auxiliary power required for the rotation of a crank shaft coupled to a bicycle pedal structure. In this regard, a sensor is mounted on the crank shaft coupled to the bicycle pedal structure to thereby detect the rotation speed and torque of the crank shaft, so as to determine whether the controller is operating and determine whether to adjust the operating status of the driving motor.

Since the sensor is mounted on the crank shaft, it not only rotates together with the crank shaft but also transmits an electrical signal by coming into contact with a collector ring. As a result, the sensor is predisposed to poor contact with a collector ring and thus unstable transmission of the electrical signal. In addition, the overall structure is not only intricate but also vulnerable.

Document WO 2013/095148 describes a bicycle pedal structure according to the preamble of claim 1.

### SUMMARY OF THE INVENTION

It is an objective of the present invention to provide a bicycle pedal structure which is capable of triggering auxiliary power, structurally simple, and operating with the least possible parts and components.

In order to achieve the above and other objectives, the present invention provides a bicycle pedal structure capable of triggering auxiliary power. The bicycle pedal structure is mounted on a bicycle chassis and connected to a driving-controlling system. The bicycle pedal structure comprises a bottom bracket, a sleeve unit, a crank shaft, two pedal cranks and a treading force sensing unit. The bottom bracket has a first opening and a second opening. The sleeve unit is disposed in the bottom bracket and has a first sleeve and a second sleeve. The first sleeve is disposed in the first opening. The second sleeve is disposed in the second opening. The crank shaft is fitted in the first sleeve and the second sleeve and rotatably disposed in the bottom bracket. The two pedal cranks are coupled to two ends of the crank shaft, respectively, extending in opposite directions, being substantially perpendicular to the crank shaft, and having a pedal each for rotating the crank shaft under a treading force. The treading force sensing unit has a plurality of piezoelectric plates. The piezoelectric plates are disposed on at least the first sleeve and the second sleeve and above the crank shaft.

As regards the bicycle pedal structure, the treading force sensing unit has four piezoelectric plates. The piezoelectric plates are disposed on the first sleeve and the second sleeve, above and below the crank shaft, respectively.

As regards the bicycle pedal structure, the first sleeve and the second sleeve each have a bearing for supporting the crank shaft.

The bicycle pedal structure further comprises a rotation speed sensor disposed on the first sleeve and spaced apart from the piezoelectric plates.

As regards the bicycle pedal structure, the first sleeve and the second sleeve each have a flange whereby the bicycle pedal structure is fixed to the bottom bracket.

As regards the bicycle pedal structure, the treading force sensing unit is disposed on a sleeve unit which does not rotate such that the treading force sensing unit does not rotate along with the crank shaft while the cyclist is riding the bicycle. Therefore, the bicycle pedal structure is not only simple in terms of its circuit, parts and components but also invulnerable.

### BRIEF DESCRIPTION OF THE DRAWINGS

Objectives, features, and advantages of the present invention are hereunder illustrated with specific embodiments in conjunction with the accompanying drawings, in which:
FIG. 1 is a perspective view of a bicycle pedal structure according to an embodiment of the present invention;
FIG. 2 is a cross-sectional view of the bicycle pedal structure according to the embodiment of the present invention;
FIG. 3 is another perspective view of the bicycle pedal structure according to the embodiment of the present invention;
FIG. 4 is another perspective view of the bicycle pedal structure taken at another angle according to the embodiment of the present invention; and
FIG. 5 is a schematic view of the operation of a crank shaft according to the embodiment of the present invention.

### DETAILED DESCRIPTION OF THE PREFERRED EMBODIMENTS

In an embodiment of the present invention, a bicycle pedal structure 1 capable of triggering auxiliary power is mounted on a bicycle chassis (not shown) and connected to a driving-controlling system (not shown). The driving-controlling system comprises a controller and a driving motor. The controller controls the strength of the output torque generated from the auxiliary power supplied by the driving motor. As soon as the driving-controlling system detects that a cyclist is treading, the controller is triggered to either start the driving motor or change the output torque of the driving motor so as to provide digital modularized auxiliary power to the bicycle pedal structure 1, thereby supplementing or replacing the power required for the forward motion of the bicycle.

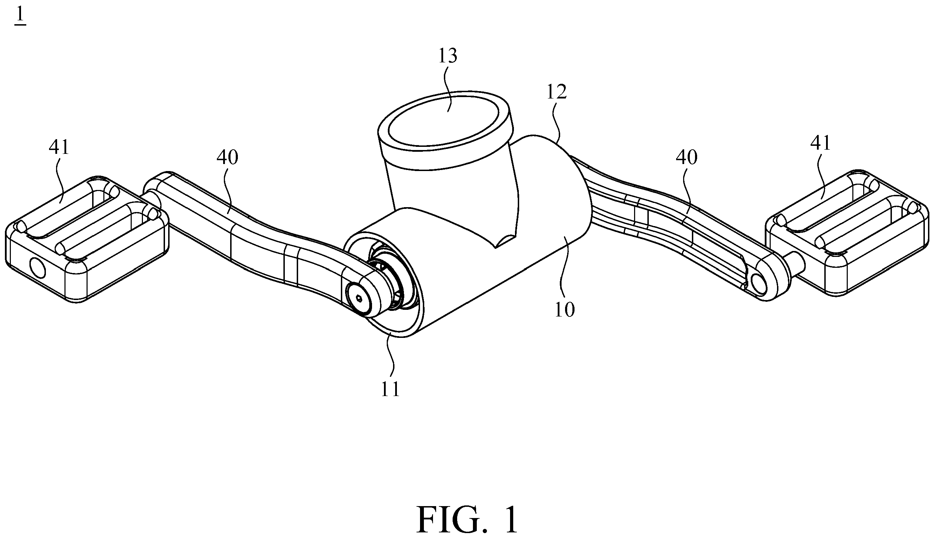

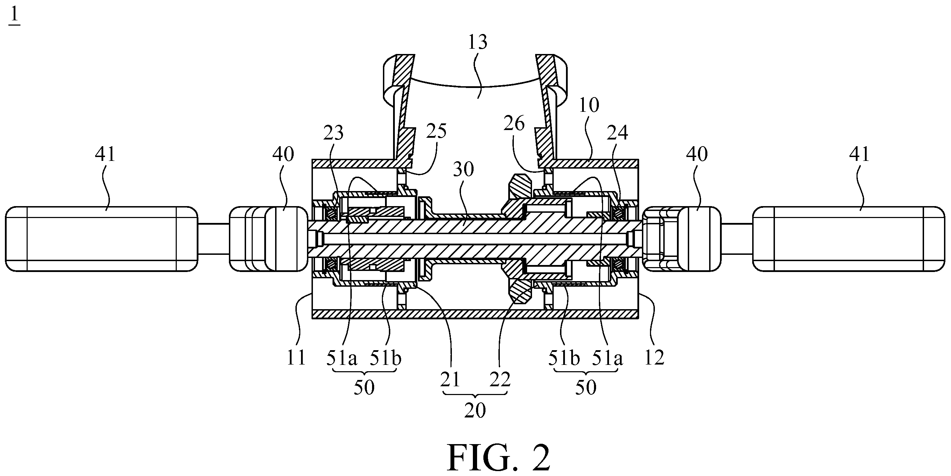

Referring to FIG. 1 and FIG. 2, in an embodiment of the present invention, the bicycle pedal structure 1 comprises a bottom bracket 10, a single-sided sleeve 20, a crank shaft 30, two pedal cranks 40 and a treading force sensing unit 50. The bottom bracket 10 has a first opening 11 and a second opening 12. The sleeve unit 20 is disposed in the bottom bracket 10 and has a first sleeve 21 and a second sleeve 22. The first sleeve 21 is disposed in the first opening 11. The second sleeve 22 is disposed in the second opening 12. The crank shaft 30 is fitted in the first sleeve 21 and the second sleeve 22 and thus rotatably disposed in the bottom bracket 10. The two pedal cranks 40 are coupled to the two ends of the crank shaft 30, respectively. The two pedal cranks 40 extend in opposite directions and are substantially perpendicular to the crank shaft 30. The pedal cranks 40 each have a pedal 41. The treading forces generated from the cyclist's left and right feet are exerted on the pedals 41, respectively, to rotate the crank shaft 30. The treading force sensing unit 50 has a plurality of piezoelectric plates 51 a. The piezoelectric plates 51a are disposed on at least the first sleeve 21 and the second sleeve 22 and above the crank shaft 30.

Referring to FIG. 1, the bottom bracket 10 is provided in the form of a casing which has therein a receiving space. The first opening 11 and the second opening 12 are opposite to each other and flank the bicycle. The bottom bracket 10 further has a third opening 13 whereby the bottom bracket 10 is mounted on the bicycle chassis.

Referring to FIG. 2, the sleeve unit 20 is disposed in the bottom bracket 10. The first sleeve 21 is disposed in the first opening 11. The second sleeve 22 is disposed in the second opening 12. The first sleeve 21 and the second sleeve 22 are fitted at the two ends of the crank shaft 30, respectively. The first sleeve 21 has therein a bearing 23. The second bearing 22 has therein a bearing 24. The bearings 23, 24 support the crank shaft 30 in a manner to allow the crank shaft 30 to be rotatably disposed in the bottom bracket 10.

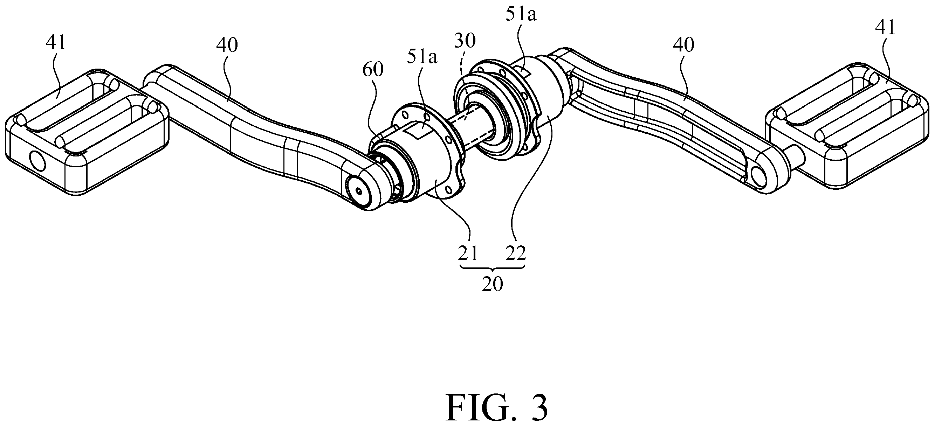

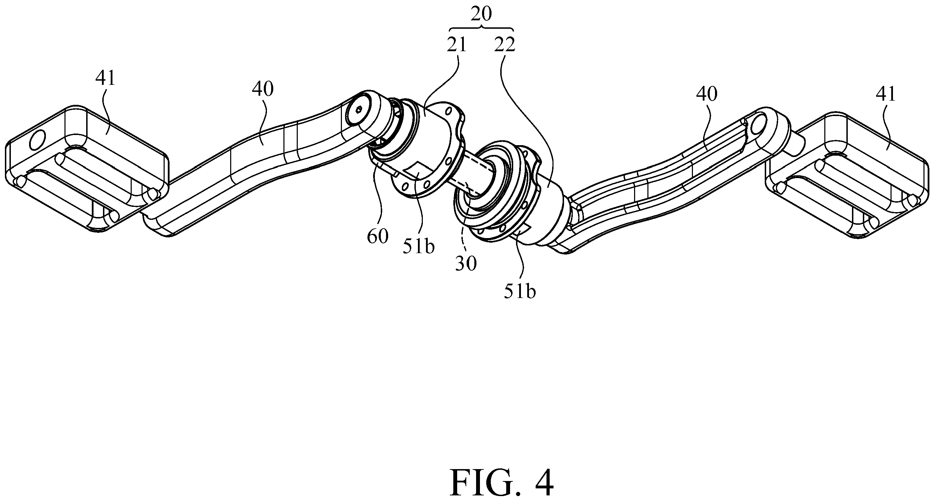

In this embodiment, the treading force sensing unit 50 has at least two piezoelectric plates 51a. The piezoelectric plates 51a are disposed on at least the first sleeve 21 and the second sleeve 22 and above the crank shaft 30. Referring to FIG. 3 and FIG. 4, the treading force sensing unit 50 has four piezoelectric plates 51a, 51b. The piezoelectric plates 51a, 51b are disposed on at least the first sleeve 21 and the second sleeve 22, respectively, and are positioned above and below the crank shaft 30, respectively. Hence, when a bicycle with the bicycle pedal structure 1 is advancing, the piezoelectric plates 51a disposed on the first sleeve 21 and the second sleeve 22 are farthest from the ground, whereas the piezoelectric plates 51b disposed on the first sleeve 21 and the second sleeve 22 are closest to the ground. Referring to FIG. 3 and FIG. 4, a flange 25, 26 is disposed at the end of each of the first sleeve 21 and the second sleeve 22. The edges of the flange 25, 26 are engaged with the bottom bracket 10 from inside to thereby allow the first sleeve 21 and the second sleeve 22 to be fixed to the bottom bracket 10.

The bicycle pedal structure 1 has a rotation speed sensor 60. The rotation speed sensor 60 is disposed on the first sleeve 21 and spaced apart from the piezoelectric plates 51a, 51b. For example, an included angle of 90 degrees is formed between the line which joins the rotation speed sensor 60 to the center of the crank shaft 30 and the line which joins the piezoelectric plates 51a or the piezoelectric plates 51b to the center of the crank shaft 30. The purpose of the rotation speed sensor 60 is to measure the rotation speed of the crank shaft 30. The rotation speed sensor 60 is exemplified by a Hall sensing component.

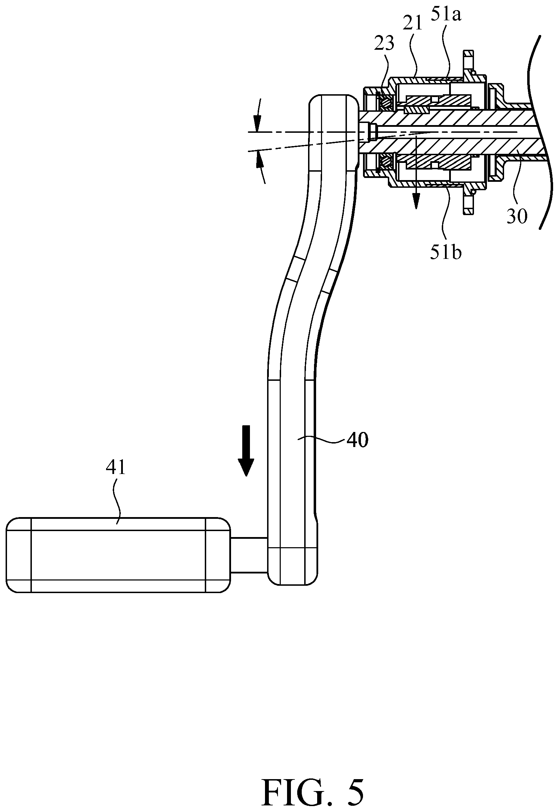

Referring to FIG. 5, in this embodiment, when the cyclist treads on the pedals 41 and thus exerts a downward treading force thereon to thereby enable the pedal cranks 40 to rotate the crank shaft 30; meanwhile, the downward treading force is conveyed to the crank shaft 30 through the pedal cranks 40 so as to not only bend the crank shaft 30 slightly but also deform the first sleeve 21. Hence, the piezoelectric plates 51a, 51b above and below the crank shaft 30 deform, undergo voltage changes, and eventually send an electrical signal to the driving-controlling system. The electrical signal thus sent triggers the driving-controlling system to generate digit modularized auxiliary power. The auxiliary power drives the crank shaft 30 to rotate; hence, it is less laborious for the cyclist to produce the treading force than without the bicycle pedal structure 1 of the present invention.

According to the embodiment of the present invention, the bicycle pedal structure 1 is characterized in that the treading force sensing unit 50 is disposed on the sleeve unit 20 which does not rotate such that the treading force sensing unit 50 does not rotate along with the crank shaft 30 while the cyclist is riding the bicycle. Therefore, the bicycle pedal structure 1 is not only simple in terms of its circuit, parts and components but also invulnerable.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention is solely defined by the appended claims.

## Claims

1. A bicycle pedal structure (1) capable of triggering auxiliary power and configured to be mounted on a bicycle chassis and connected to a driving-controlling system, the bicycle pedal structure comprising:
a bottom bracket (10) having a first opening (11) and a second opening (12);
a sleeve unit (20) disposed in the bottom bracket and having a first sleeve (21) and a second sleeve (22), with the first sleeve (21) disposed in the first opening (11) and the second sleeve (22) disposed in the second opening (12);
a crank shaft (30) fitted in the first sleeve (21) and the second sleeve (22) and rotatably disposed in the bottom bracket (10);
two pedal cranks (40) coupled to two ends of the crank shaft (30), respectively, extending in opposite directions, being substantially perpendicular to the crank shaft (30), and having a pedal (41) each for rotating the crank shaft (30) under a treading force; and
a treading force sensing unit (50) having a plurality of piezoelectric plates (51a, 51b) disposed on at least the first sleeve (21) and the second sleeve (22) and above the crank shaft (30),
**characterized in that**: the treading force sensing unit (50) has four piezoelectric plates (51a, 51b) disposed on at least the first sleeve (21) and the second sleeve (22), above and below the crank shaft (30), respectively.

2. The bicycle pedal structure of claim 1, wherein the first sleeve (21) and the second sleeve (22) each have a bearing (23, 24) for supporting the crank shaft (30).

3. The bicycle pedal structure of claim 2, further comprising a rotation speed sensor (60) disposed on the first sleeve (21) and spaced apart from the piezoelectric plates (51a, 51b).

4. The bicycle pedal structure of claim 2, further comprising a rotation speed sensor (60) disposed on the first sleeve (21) and spaced apart from the piezoelectric plates (51a, 51b).

5. The bicycle pedal structure of claim 3, wherein the first sleeve (21) and the second sleeve (22) each have a flange (25, 26) whereby the first sleeve (21) and the second sleeve (22) are fixed to the bottom bracket (10).

6. The bicycle pedal structure of claim 4, wherein the first sleeve (21) and the second sleeve (22) each have a flange (25, 26) whereby the first sleeve (21) and the second sleeve (22) are fixed to the bottom bracket (10).

## Patentansprüche

1. Fahrradpedalstruktur (1) mit Fähigkeit zur Auslösung von Hilfsleistung und ausgebildet, um auf einem Fahrradfahrgestell eingebaut und mit einem Antriebssteuersystem verbunden zu werden, wobei die Fahrradpedalstruktur Folgendes umfasst:
ein Tretlager (10) mit einer ersten Öffnung (11) und einer zweiten Öffnung (12);
eine Buchseneinheit (20), die in dem Tretlager angeordnet ist und eine erste Buchse (21) und eine zweite Buchse (22) aufweist, wobei die erste Buche (21) in der ersten Öffnung (11) angeordnet ist und die zweite Buchse (22) in der zweiten Öffnung (12) angeordnet ist;
eine Kurbelwelle (30), die in der ersten Buchse (21) und der zweiten Buchse (22) eingesteckt und drehbar in dem Tretlager (10) angeordnet ist;
zwei Tretkurbeln (40), die mit zwei Enden der Kurbelwelle (30) gekoppelt sind, die sich jeweils in entgegengesetzte Richtungen erstrecken, im Wesentlichen senkrecht zur Kurbelwelle (30) stehen und jeweils ein Pedal (41) zum Drehen der Kurbelwelle (30) unter Einwirkung einer Tretkraft aufweisen; und
eine Tretkrafterfassungseinheit (50) mit einer Mehrzahl von piezoelektrischen Platten (51a, 51b), die auf wenigstens der ersten Buchse (21) und auf der zweiten Buchse (22) und oberhalb der Kurbelwelle (30) angeordnet sind,
**dadurch gekennzeichnet, dass**: die Tretkrafterfassungseinheit (50) vier piezoelektrische Platten (51a, 51b) aufweist, die jeweils auf wenigstens der ersten Buchse (21) und auf der zweiten Buchse (22) und oberhalb und unterhalb der Kurbelwelle (30) angeordnet sind.

2. Fahrradpedalstruktur nach Anspruch 1, wobei die erste Buchse (21) und die zweite Buchse (22) jeweils ein Lager (23, 24) zur Lagerung der Kurbelwelle (30) aufweisen.

3. Fahrradpedalstruktur nach Anspruch 2, ferner umfassend einen Drehgeschwindigkeitssensor (60), der auf der ersten Buchse (21) angeordnet und von den piezoelektrischen Platten (51a, 51b) beabstandet ist.

4. Fahrradpedalstruktur nach Anspruch 2, ferner umfassend einen Drehgeschwindigkeitssensor (60), der auf der ersten Buchse (21) angeordnet und von den piezoelektrischen Platten (51a, 51b) beabstandet ist.

5. Fahrradpedalstruktur nach Anspruch 3, wobei die erste Buchse (21) und die zweite Buchse (22) jeweils einen Flansch (25,26) aufweisen, wobei die erste Buchse (21) und die zweite Buchse (22) an dem Tretlager (10) befestigt sind.

6. Fahrradpedalstruktur nach Anspruch 4, wobei die erste Buchse (21) und die zweite Buchse (22) jeweils einen Flansch (25,26) aufweisen, wobei die erste Buchse (21) und die zweite Buchse (22) an dem Tretlager (10) befestigt sind.

## Revendications

1. Structure de pédale de bicyclette (1) capable de déclencher une puissance auxiliaire et configurée pour être montée sur un châssis de bicyclette et connectée à un système de commande d'entraînement, la structure de pédale de bicyclette comprenant :
un axe de pédalier (10) ayant une première ouverture (11) et une deuxième ouverture (12) ;
une unité de manchon (20) disposée dans l'axe de pédalier et ayant un premier manchon (21) et un deuxième manchon (22), avec le premier manchon (21) disposé dans la première ouverture (11) et le deuxième manchon (22) disposé dans la deuxième ouverture (12) ;
un arbre de manivelle (30) inséré dans le premier manchon (21) et le deuxième manchon (22) et disposé de manière rotative dans l'axe de pédalier (10) ;
deux manivelles de pédale (40) couplées respectivement à deux extrémité de l'arbre de manivelle (30), s'étendant dans des directions opposées, étant sensiblement perpendiculaires à l'arbre de manivelle (30), et ayant une pédale (41), chacune pour faire tourner l'arbre de manivelle (30) sous une force de poussée de pied ; et
une unité de détection de force de poussée de pied (50) ayant une pluralité de plaques piézoélectriques (51a, 51b) disposées sur au moins le premier manchon (21) et le deuxième manchon (22) et au-dessus de l'arbre de manivelle (30), **caractérisée en ce que** : l'unité de détection de force de poussée de pied (50) comporte quatre plaques piézoélectriques (51a, 51b) disposées sur au moins le premier manchon (21) et le deuxième manchon (22) et au-dessus et au-dessous de l'arbre de manivelle (30), respectivement.

2. Structure de pédale de bicyclette selon la revendication 1, dans laquelle le premier manchon (21) et le deuxième manchon (22) ont chacun un palier (23, 24) pour supporter l'arbre de manivelle (30).

3. Structure de pédale de bicyclette selon la revendication 2, comprenant en outre un capteur de vitesse de rotation (60) disposé sur le premier manchon (21) et espacé des plaques piézoélectriques (51a, 51b).

4. Structure de pédale de bicyclette selon la revendication 2, comprenant en outre un capteur de vitesse de rotation (60) disposé sur le premier manchon (21) et espacé des plaques piézoélectriques (51a, 51b).

5. Structure de pédale de bicyclette selon la revendication 3, dans laquelle le premier manchon (21) et le deuxième manchon (22) ont chacun une bride (25, 26) par laquelle le premier manchon (21) et le deuxième manchon (22) sont fixés à l'axe de pédalier (10).

6. Structure de pédale de bicyclette selon la revendication 4, dans laquelle le premier manchon (21) et le deuxième manchon (22) ont chacun une bride (25, 26) par laquelle le premier manchon (21) et le deuxième manchon (22) sont fixés à l'axe de pédalier (10).
